# EUROPÄISCHE PATENTANMELDUNG

(11) **EP 1 761 005 A2**
(43) Veröffentlichungstag der Anmeldung: **07.03.2007**
(21) Anmeldenummer: 06015567.8
(22) Anmeldetag: 26.07.2006
(51) Int. Cl.: H04M 1/66

(54) **Junk-Call Taste für Telefon Endgeräte**

(30) Priorität: 03.09.2005 DE 102005041896
(71) Anmelder: Deutsche Telekom AG, 53113 Bonn (DE)
(72) Erfinder: Hermann, Roland, 53117 Bonn (DE)

(57) **Zusammenfassung**

Verfahren zur Verarbeitung eines an das Endgerät eines Angerufenen adressierten Anrufes 2, wobei mit dem eingehenden Anruf 2 den Anruf 2 charakterisierende Daten übermittelt werden, wobei der Angerufene vor dem Aufbau oder nach der Herstellung der Verbindung durch Eingabe eines Kurzbefehls die Verbindung abbricht, wobei ein solcher durch den Kurzbefehl initiierter Abbruch zu einer Speicherung der charakteristischen Daten, insbesondere der Kennung, des Anrufes 2 in einer Datenbank 5 führt, wobei derart in der Datenbank 5 gespeicherte Daten automatisch im Rahmen einer Filterfunktion mit den entsprechenden Daten nachfolgend eingehender Anrufe verglichen werden, wobei ein späterer Anruf nicht an das Endgerät des Angerufenen durchgestellt wird, wenn seine charakteristischen Daten mit den charakteristischer Daten in der Datenbank 5 übereinstimmen.

## Beschreibung

Die Erfindung betrifft ein Verfahren zur Verarbeitung eines am Endgerät eines Angerufenen adressierten Anrufes, wobei mit dem Anruf die Netzkennung des Anrufers übermittelt wird. Die Erfindung betrifft zudem ein für die Umsetzung des Verfahrens geeignetes Endgerät.

Nachdem die Nutzer des elektronischen Postverkehrs (E-mail) im Laufe der Zeit immer stärker mit unerwünschten "Junk" Mails zugeschüttet wurden, weitet sich diese ärgerliche Plage nun auch auf Telefonnetze aus. So erhalten die Inhaber mobiler oder fester Telefonanschlüsse in wachsender Zahl Anrufe, in denen ihnen dubiose Angebote gemacht werden oder die sie zum Rückruf einer besonders teuren Netzkennung animieren, unter der sie einen zweifelhaften Dienst in Anspruch nehmen können. Dabei werden gerade ältere und unbedarfte Menschen immer wieder Opfer solcher "Junk-Call" Attacken, gegen die es noch kein wirksames Mittel gibt, das die Teilnehmer vor überhöhten Telefonrechnungen schützen könnte.

Die Aufgabe der Erfindung liegt nunmehr darin, ein Verfahren zu schaffen, das sich einfach und mit kostengünstigen Mitteln umsetzen lässt und das zu einer Abwehr unerwünschter Anrufe beiträgt. Zudem ist es Aufgabe der Erfindung ein einfach zu handhabendes Endgerät für die Umsetzung des Verfahrens zu schaffen.

Diese Aufgaben werden durch das Verfahren nach Anspruch 1 und das Endgerät nach Anspruch 10 gelöst. Vorteilhafte Ausgestaltungen sind in den jeweiligen Unteransprüchen genannt.

Der wesentliche Grundgedanke der Erfindung liegt darin, eine Möglichkeit zu schaffen, mit der ein mit einem "Junk" Anruf belästigter Teilnehmer ohne weiteres den Anruf beenden und die Nummer des Anrufers gewissermaßen "verbrennen" kann, so dass jeder weitere von dieser Nummer ausgehende Anruf nicht noch einmal bis zum Endgerät durchgestellt wird. Dabei bedeutet "durchgestellt" in diesem Zusammenhang, dass das Endgerät des Angerufenen zumindest kein Signal abgibt, um den Anruf anzukündigen und den Angerufenen aufmerksam zu machen. Gleichwohl kann es möglich sein, dass der Anruf in dem Sinne bis an das Endgerät gelangt, als er erst dort verarbeitet wird. Dabei können als Endgerät alle technischen Geräte verwendet werden, die eine Sprachkommunikation unter Vorgabe einer Adresse oder Telefonnummer erlauben. Dazu zählen neben den stationären oder mobilen Telefonen auch Geräte, die auf der Basis von Voice over IP funktionieren.

Erfindungsgemäß kann der Angerufene schon vor dem Aufbau der Verbindung, wenn er beispielsweise eine 0190 Nummer im Display erkennt, oder nach der Herstellung der Verbindung, wenn der Angerufene schon vom Anrufer oder einem Tonband angesprochen wird, durch Eingabe eines Kurzbefehls die Verbindung sofort trennen. Diese abrupte Trennung durch den Kurzbefehl führt zu einer Speicherung der Kennung oder sonstiger übermittelter charakteristischer Daten des Anrufers in einer Datenbank. Diese Datenbank, respektive die mit dem Datenbankprogramm realisierte Filterfunktion, bildet die Grundlage für die erfindungsgemäße Funktion und wird auf Veranlassung des Angerufenen nach und nach mit entsprechend "verbrannten" Nummern aufgefüllt.

Ein weiterer wesentlicher Gesichtspunkt der Erfindung ist, dass die Kennungen respektive die charakteristischen Daten aller eingehenden späteren Anrufe vermittels dieser Filterfunktion gefiltert werden. Dazu werden die in der Datenbank gespeicherte Daten automatisch mit den entsprechenden Daten nachfolgend eingehender Anrufe verglichen. Nur Anrufe, deren charakteristische Daten nicht als "verbrannt" gekennzeichnet sind, werden an das Endgerät des Angerufenen durchgestellt. Dabei ist die technische Realisierung des Sperrens von Kennungen bekannt und schon heute in einigen Endgeräten realisiert.

Besonders vorteilhaft ist es, wenn die Netzkennung des Anrufes, also im Falle einer telephonischen Verbindungen die Telefonnummer, als charakteristische Daten im Sinne der Erfindung benutzt werden. Im Falle der Internettelefonie wird die entsprechende IP-Adresse des anrufenden Rechners übermittelt. Diese Netzkennungen sind einzigartig und daher besonders für die Durchführung der Filterfunktion geeignet.

Während bekannte Endgeräte nur ein menügestütztes eventuell sogar durch zusätzliche PIN Eingabe gesichertes Sperren vor oder nach einem Anruf erlauben, liegt der Vorteil der Erfindung darin, dass durch die Möglichkeit des besonderen Kurzbefehls das schnelle kombinierte Abbrechen und Sperren von lästigen Anrufen möglich wird. Der besondere Vorteil der Erfindung liegt darin, dass der Angerufene spontan und intuitiv reagieren kann, ohne sich durch ein kompliziertes Menü durchzuklicken.

Dabei kann die spontane Reaktion, die zur abrupten Trennung führt, in einem Sprachbefehl liegen. Der Angerufene könnte dazu sein Endgerät derart initialisiert haben, dass es beispielsweise auf den Ausruf "Stop" mit der Trennung reagiert. Eine solche verbale Äußerung ist sicherlich mit der kürzesten Reaktionszeit verbunden. Eine andere Möglichkeit ist die Einrichtung einer besonderen Taste, bei deren Drücken die erfindungsgemäße Trennung vollzogen wird. Dabei kann die Taste eine ehedem am Endgerät befindliche Taste sein, die durch spezielle Programmierung eine besondere Belegung erfährt. Diese Lösung hat den Vorteil, dass jedes Endgerät entsprechend nachgerüstet werden kann. Eine andere Möglichkeit ist, das Endgerät mit einer besonders markanten Taste auszustatten, die für den Nutzer ohne weiteres in jeder Situation auch von älteren Menschen spontan auffindbar ist. Das Endgerät hätte damit eine wohlgekennzeichnete "Junk-Call" Taste.

Durch Eingabe des Kurzbefehls während eines Gesprächs oder während dessen Anbahnung, also beispielsweise beim Drücken dieser Junk-Call Taste, wird das Gespräch automatisch beendet und die anrufende Nummer für weitere Anrufe gesperrt. In einer besonders vorteilhaften Ausführungsform wird nach dem Abbruch einmalig beispielsweise eine SMS, eine MMS oder eine E-Mail mit einer vorzugebenden Rückmeldung, wie "Junk-Call" oder "Ihr Anruf ist unerwünscht" automatisch generiert und an den Anschluss des Anrufers abgesendet.

Da nicht jeder Angerufene dieselben Abneigungen hat, ist das Verbrennen von Kennungen eine recht individuelle Angelegenheit. Die erfindungsgemäß genutzte Datenbank ist daher vorteilhafterweise einem einzelnen Endgeräteanschluss zugeordnet und nicht zentral für eine Vielzahl von Endgeräten zugänglich. Damit wird vermieden, dass ganz "normale" Rufnummern, wie die des Finanzamtes, die eventuell für einige, nicht aber für alle Nutzer unerwünscht sind, generell gesperrt werden. Die Datenbank wird daher wie das Adressbuch entweder im Endgerät selber oder an online zugänglicher Stelle für den speziellen Endgeräteanschluss geführt. So kann jede Eingabe des Kurzbefehls, insbesondere jedes Drücken der Junk-Call Taste zusammen mit allen vorhandenen Adressinformationen des Anrufers, sowie der Systemzeit in der insbesondere internen Datenbank protokolliert werden.

In einer vorteilhaften Ausführungsform der Erfindung werden auch weitere Anrufe schon gesperrter Anschlüsse noch einmal in der Datenbank gespeichert. Wenn der Nutzer Bedarf verspürt oder die Anzahl der Belästigungen durch eine Kennung nachweisen will, kann er menügestützt die protokollierten Belästigungen abrufen. In einer anderen Ausführungsform ist es vorteilhaft, wenn es durch die auf dem Endgerät laufende Menüführung möglich wird, Sperrungen aufzuheben und/oder Meldetexte zu verändern.

Weiterhin kann es vorteilhaft sein, die Junk-Call Taste mit einer Signalfunktion zu versehen. Damit kann bei jedem Anruf einer gesperrten Nummer, ein Blinken, Leuchten oder Vibrieren der Taste geschehen. Trotz des spontanen Abbruchs von Verbindungen bleiben dem Nutzer mit diesen funktionalen Erweiterungen alle datenbankunterstützten Möglichkeiten zur wirksamen Belästigungskontrolle erhalten.

Zunächst kann die Erfindung nur dann funktionieren, wenn die Netzkennung oder andere Daten mit dem Anruf übermittelt werden und als Adressinformationen des Anrufers im Übertragungsnetz zum Endgerät des Angerufenen gelangen. Mit einer Rufnummerunterdrückung würde das Verfahren ausgehebelt. Es wäre jedoch vorteilhaft, wenn trotz Rufnummerunterdrückung die Kennung, die auf jeden Fall übermittelt aber nicht unbedingt angezeigt wird in der Datenbank gespeichert wird.

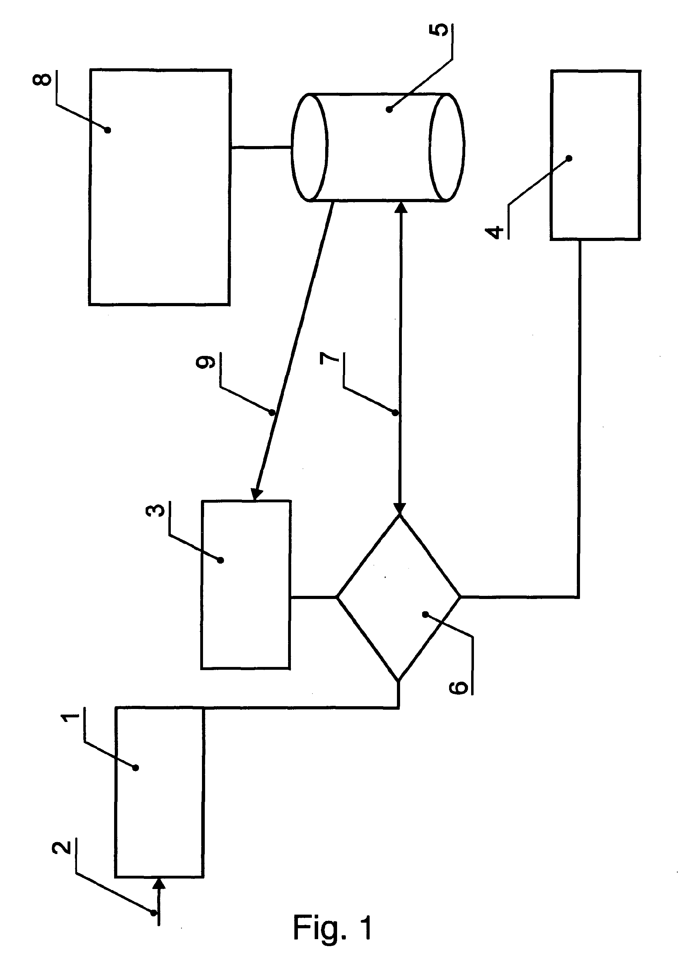

Die Erfindung wird anhand eines Ausführungsbeispieles anhand der Figur erklärt.

In der Figur ist ein dynamischer Eingangsspeicher 1 dargestellt, in dem zunächst alle verfügbaren charakteristischen Daten des eingehenden Anrufs 2 festgehalten werden. Nun ertönt das Signal des Endgerätes und der Angerufene hebt ab, wenn er nicht schon im Vorfeld den Junk-Call erkennt. Nach Drücken der Junk-Call Taste 3 wird der Anruf unterbrochen und alle im Eingangsspeicher 1 vorhandenen Daten zusammen mit der Systemzeit 4 an die internen Datenbank 5, die Teil der Filterfunktion ist, übertragen und damit als "verbrannt" gekennzeichnet.

Eine zentrale Rolle kommt der Abfrage 6 zu. Diese kontrolliert zunächst, ob die Daten des eingehenden Anrufes 2 schon in der Datenbank 5 vorhanden sind. Falls ja, wird der Anruf nicht durchgestellt, aber für die weitere Bearbeitung mit seinen Daten noch einmal in der Datenbank 5 gespeichert. Insofern ist die Verbindung 7 zwischen der Abfrage 6 und der Datenbank 5 bidirektional. Wird der Anruf durchgestellt und der Nutzer drückt die Junk-Call Taste 3 geht das bei der Abfrage 6 ein und die automatische Rufnummernsperrung, sowie die Speicherung der Information wird veranlasst. Dabei geschieht die Rufnummernsperrung mittels einer Funktion 8, wie sie an sich bekannt ist. Falls eine gesperrte Rufnummer anruft, wird von der die Datenbank verwaltende Filterfunktion eine Signalfunktion der Junk-Call Taste 3 über den Weg 9 initiiert.

Die Erfindung wird mit einem System umgesetzt das ein zum Austausch von Gesprächen geeignetes Telekommunikationsnetz aufweist, über das eine Vielzahl von Endgeräten verbunden sind. Dabei weist ein Endgerät ein Mittel zur Eingabe eines Kurzbefehls, insbesondere eine "Junk-Call" Taste, auf, wobei die Eingabe des Kurzbefehls den Abbruch der Verbindung initiiert und eine Speicherung der charakteristischer Daten des Anrufes in einer dem Endgerät zugeordneten Datenbank veranlasst. Dabei ist insbesondere auf dem Endgerät eine Filterfunktion realisiert, die charakteristische Daten nachfolgend eingehender Anrufe mit den gespeicherten Daten vergleicht und auf die oben beschrieben Weise einen späteren Anruf abfängt, wenn seine charakteristischen Daten mit den charakteristischer Daten in der Datenbank übereinstimmen.

## Patentansprüche

1. Verfahren zur Verarbeitung eines an das Endgerät eines Angerufenen adressierten Anrufes (2), wobei mit dem eingehenden Anruf (2) den Anruf (2) charakterisierende Daten übermittelt werden,
**dadurch gekennzeichnet,**
**dass** der Angerufene vor dem Aufbau oder nach der Herstellung der Verbindung durch Eingabe eines Kurzbefehls die Verbindung abbricht, wobei ein solcher durch den Kurzbefehl initiierter Abbruch zu einer Speicherung der charakteristischen Daten, insbesondere der Kennung, des Anrufes (2) in einer Datenbank (5) führt, wobei derart in der Datenbank (5) gespeicherte Daten automatisch im Rahmen einer Filterfunktion mit den entsprechenden Daten nachfolgend eingehender Anrufe verglichen werden, wobei ein späterer Anruf nicht an das Endgerät des Angerufenen durchgestellt wird, wenn seine charakteristischen Daten mit den charakteristischer Daten in der Datenbank (5) übereinstimmen.

2. Verfahren nach Anspruch 1,
**dadurch gekennzeichnet,**
**dass** als charakteristische Daten die Netzkennung, insbesondere die Telefonnummer, übermittelt und zur Grundlage der Filterfunktion gemacht wird.

3. Verfahren nach Anspruch 1 oder 2,
**dadurch gekennzeichnet,**
**dass** der Kurzbefehl unmittelbar nach dem Wahrnehmen des Signals zur Ankündigung des Anrufes und vor Aufnahme der Verbindung eingegeben wird, um die anrufende Kennung für weiter Anrufe (2) zu sperren.

4. Verfahren nach einem der vorherigen Ansprüche,
**dadurch gekennzeichnet,**
**dass** nach dem Abbruch eine Nachricht, beispielsweise eine SMS, MMS oder eine E-Mail, mit einer vorzugebenden Rückmeldung automatisch generiert und an den Anschluss des Anrufers abgesendet wird.

5. Verfahren nach einem der vorherigen Ansprüche,
**dadurch gekennzeichnet,**
**dass** die erfindungsgemäß genutzte Datenbank (5) einem einzelnen Endgeräteanschluss zugeordnet ist.

6. Verfahren nach Anspruch 5,
**dadurch gekennzeichnet,**
**dass** die Datenbank (5) im Endgerät selber oder für den speziellen Endgeräteanschluss an online zugänglicher Stelle geführt wird.

7. Verfahren nach einem der vorherigen Ansprüche,
**dadurch gekennzeichnet,**
**dass** im Falle eines "verbrannten" Anrufes dieser noch einmal in der Datenbank (5) gespeichert wird, wo er vom Nutzer des Endgerätes abgerufen wird.

8. Verfahren nach einem der vorherigen Ansprüche,
**dadurch gekennzeichnet,**
**dass** eine Sperrung durch den Nutzer menügeführt aufgehoben wird.

9. Verfahren nach einem der vorherigen Ansprüche,
**dadurch gekennzeichnet,**
**dass** Meldetexte durch den Nutzer menügeführt verändert werden.

10. System zur Umsetzung des Verfahrens nach einem der vorherigen Ansprüche aufweisend ein zum Austausch von Gesprächen geeignetes Telekommunikationsnetz, über das eine Vielzahl von Endgeräten verbunden sind,
**dadurch gekennzeichnet,**
**dass** ein Endgerät ein Mittel (3) zur Eingabe eines Kurzbefehls aufweist, wobei die Eingabe des Kurzbefehl den Abbruch der Verbindung initiiert und eine Speicherung der charakteristischer Daten des Anrufes (2) in einer dem Endgerät zugeordneten Datenbank (5) veranlasst, wobei auf dem Endgerät eine Filterfunktion realisiert ist, die charakteristische Daten nachfolgend eingehender Anrufe (2) mit den gespeicherten Daten vergleicht, wobei die Filterfunktion einen späteren Anruf abfängt, wenn seine charakteristischen Daten mit den charakteristischer Daten in der Datenbank (5) übereinstimmen.
